# EUROPEAN PATENT SPECIFICATION

(11) **EP 4 484 239 B1**
(45) Date of publication and mention of the grant of the patent: **05.11.2025**
(21) Application number: 24171541.6
(22) Date of filing: 22.04.2024
(51) Int. Cl.: B60W 30/18, B60W 60/00

(54) **DRIVING CONTROL APPARATUS FOR VEHICLE**
ANTRIEBSSTEUERUNGSVORRICHTUNG FÜR EIN FAHRZEUG
APPAREIL DE COMMANDE DE CONDUITE POUR VÉHICULE

(30) Priority: 30.06.2023 JP 2023108363
(43) Date of publication of application: 01.01.2025
(73) Proprietor: Suzuki Motor Corporation, Shizuoka 432-8611 (JP)
(72) Inventor: KIDA, Shogo, HAMAMATSU-SHI, 432-8611 (JP); TOJO, Yoshiaki, HAMAMATSU-SHI, 432-8611 (JP)
(74) Representative: Plasseraud IP

(56) References cited:
- DE-A1- 102016 215 046
- DE-A1- 102018 220 505
- JP-A- 2020 066 383
- US-A1- 2017 010 616

## Description

### [Technical Field]

The present invention relates to a driving control apparatus for vehicle capable of executing automated driving.

### [Background Art]

Development of vehicles for performing automated driving by control of an automatic operation apparatus has been progressing. In a vehicle in which automated driving equivalent to SAE (Society of Automotive Engineers) levels 3-5 is performed, an automatic operation apparatus mainly performs vehicle control according to automated driving levels. Therefore, even in a case of driving through a curved section, it is basically not necessary for a driver to perform a driving operation. When driving through a curved section by automated driving, a case of performing speed control of a vehicle so as to drive at a same speed as that of a straight path, and a case of performing speed control so as to drive through a curved section at a speed different from that of a straight path, can be considered.

As an example of speed control of an automated driving vehicle in a curved section, JP 2020 066383 A discloses a vehicle control apparatus that sets a target vehicle speed to perform turn driving through a curved path, and sets a target acceleration rate to implement the target vehicle speed, by taking into consideration an inter-vehicle distance with a front vehicle, a turning radius of a curved path and the like. The apparatus of JP 2020 066383 A reduces car sickness of an occupant, by performing turn driving at an almost constant acceleration rate, from a start of turn driving until completion. Further driving control apparatuses for vehicle are known from DE 10 2016 215046 A1, DE 10 2018 220505 A1 and US 2017/010616 A1.

### [Summary of Invention]

### [Problem to be Solved by the Invention]

As stated, in a vehicle in which automated driving equivalent to levels 3-5 is performed, since vehicle control is performed with an automatic operation apparatus as a main actor, it is basically not necessary for a driver to perform a driving operation during automated driving, and the driver rides as a passenger, and not as a driver, even if sitting in the driver's seat. A passenger riding during automated driving tends to feel uncomfortable or uneasy in a case in which the behavior of a vehicle during automated driving is different from the behavior of a case in which a passenger himself or herself performs a driving operation. In particular, in a case in which a vehicle drives through a curved section, a passenger is likely to feel uneasy as to whether vehicle control is appropriately performed by the automatic operation apparatus, and this feeling of uneasiness is influenced by the topography or landform in the surroundings of the curved section. In particular, a feeling of uneasiness may increase in a case in which there is a steep inclined section, such as a cliff, in the surroundings of a curved section.

In view of such circumstances, an objective of the present invention is to provide a driving control apparatus for vehicle that can reduce a feeling of uneasiness of a passenger when driving through a curved section by automated driving.

### [Means for Solving the Problem]

This objective is achieved by a driving control apparatus for vehicle as descibed in claim 1.

### [Advantageous Effect of Invention]

The driving control apparatus for vehicle according to the present invention can reduce a feeling of uneasiness of a passenger when driving through a curved section by automated driving.

### [Brief Description of Drawings]

[Figure 1] Figure 1 is a block diagram showing a schematic configuration of a driving control apparatus for vehicle in a first embodiment of the present invention.
[Figure 2] Figures 2(a) and 2(b) are figures schematically showing a curved section.
[Figure 3] Figure 3 is a flow chart for describing a flow of speed control in the first embodiment.
[Figure 4] Figure 4 is a flow chart for describing a flow of speed control in a second embodiment.
[Figure 5] Figure 5 is a block diagram for showing a schematic configuration of a driving control apparatus for vehicle in a third embodiment of the present invention.
[Figure 6] Figure 6 is a flow chart for describing a flow of speed control in the third embodiment.

### [Mode for Carrying Out the Invention]

### First Embodiment

Hereinafter, a driving control apparatus for vehicle according to a first embodiment of the present invention will be described in detail by referring to the drawings. The driving control apparatus for vehicle according to the present embodiment is configured to be capable of executing automated driving by recognizing an ego vehicle position and a surrounding environment of the ego vehicle (own vehicle) by means of external sensors such as a radar and camera, and controlling a vehicle speed and steering.

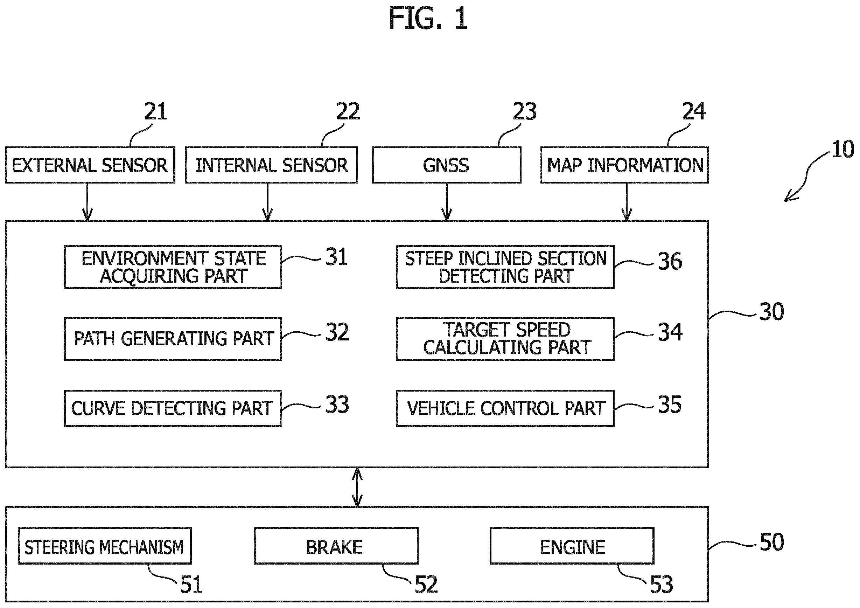

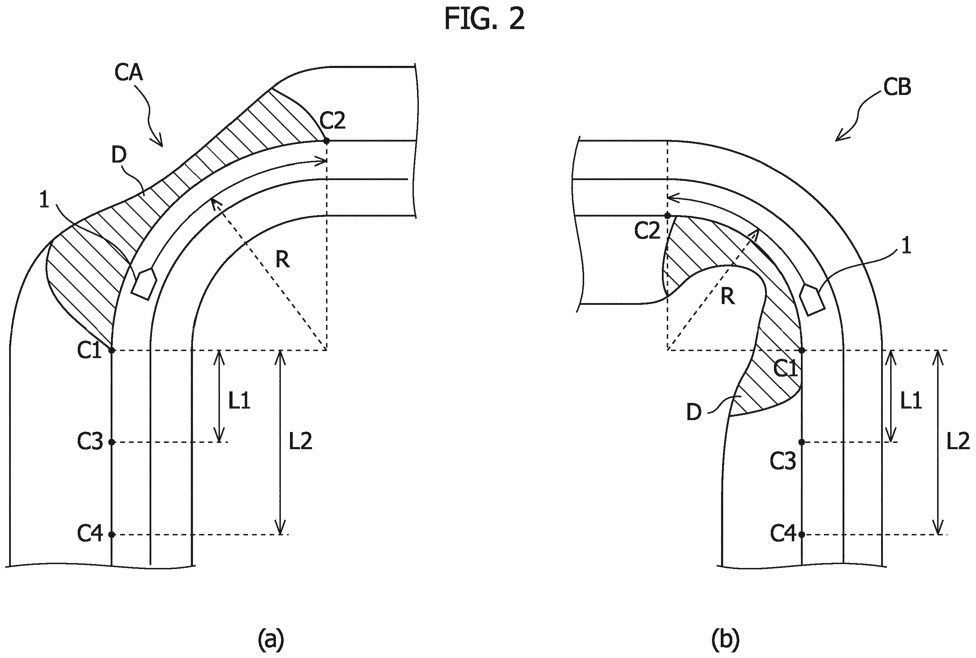

Figure 1 is a block diagram showing a schematic configuration of a driving control apparatus for vehicle in the first embodiment, and Figures 2(a) and 2(b) are figures schematically showing a curved section in which a vehicle travels. A driving control apparatus 10 of a vehicle 1 includes an external sensor 21 for detecting a vehicle surrounding environment, an internal sensor 22 for detecting a vehicle state that includes a driving state, a positioning device 23 such as a Global Navigation Satellite System (GNSS), a map information database 24, an automated driving controller 30, a driving module 50 and the like. In the present embodiment, it is assumed that the vehicle 1 performs automated driving on a typical (local) road, however, the present embodiment may also be applied to a road other than a typical road, such as a highway.

The external sensor 21 includes a plurality of detection means for detecting lane markings on a road that define an own traffic lane in which the vehicle 1 travels and an adjacent traffic lane, and presence of and relative distance to obstacles such as another vehicle and a ground object in the surroundings of the vehicle 1, as external data such as image data or point cloud data.

The external sensor 21 includes, for example, a plurality of cameras that image the front region and rear region of the vehicle 1 by using imaging elements, a millimeter wave radar that transmits radio waves to the front region of the vehicle 1 so as to detect obstacles, and LiDAR that irradiates laser light to the front region and rear region of the vehicle so as to measure distances and directions to obstacles, and the like. Note that the external sensor 21 is not limited to the detection means described above, and it may be configured to cover 360 degrees around the vehicle 1 so as to detect distances and the positions of obstacles or the like within a prescribed range in the front-rear and the left-right directions of the vehicle 1, and lane marking positions of a traffic lane in which it is in and an adjacent traffic lane.

The internal sensor 22 includes a plurality of detection means for measuring physical quantities that represent a driving state of the vehicle 1. The internal sensor 22 includes, for example, a vehicle speed sensor for detecting a vehicle speed of the vehicle 1, a lateral acceleration sensor for detecting an acceleration rate in a vehicle width direction of the vehicle 1, that is, a lateral acceleration rate, a yaw rate sensor for detecting a yaw rate of the vehicle 1, an acceleration sensor for detecting an acceleration rate in a front-rear direction of the vehicle 1 and the like.

The external sensor 21 and the internal sensor 22 are configured so as to start an operation at the same time as a start of the vehicle 1, to constantly monitor a surrounding environment and vehicle state of the vehicle 1, and to transmit the detected data to the automated driving controller 30.

The positioning device 23 is configured so as to receive radio waves from a GNSS satellite, and acquire current position information such as latitude and longitude of the vehicle 1. The map information database 24, for example, is a storage device for storing map information such as a three-dimensional high precision map. For example, information related to a limit speed set by a road type or road sign, information related to a shape of a road such as a curvature, a gradient, and a number of traffic lanes, information related to obstacles such as a guard rail or a side wall present along a road, information related to a steep inclined section present in the road surroundings such as a cliff shaped inclined surface and the like are stored, in association with position information of a road, in the map information database 24. Current position information acquired by the positioning device 23 and map information of the map information database 24 are input to the automated driving controller 30.

The automated driving controller 30, for example, is constituted with a computer that includes a ROM for storing programs and data, a CPU for performing arithmetic processes, a RAM for storing active data and arithmetic process results, an input/output interface and the like. The automated driving controller 30 is configured to execute functions of an environment state acquiring part 31, a path generating part 32, a curve detecting part 33, a target speed calculating part 34, a vehicle control part 35, and a steep inclined section detecting part 36, and to perform overall control of the driving control apparatus 10 for the vehicle 1.

The environment state acquiring part 31 is configured so as to acquire information related to a vehicle state and a surrounding environment of the vehicle 1. For example, the environment state acquiring part 31 estimates an absolute position of the vehicle 1 (an ego vehicle position) by matching position information of the vehicle 1 input from the positioning device 23 and map information input from the map information database 24. The environment state acquiring part 31 estimates the lane marking position of a traffic lane in which the vehicle is in (own traffic lane) and an adjacent traffic lane, the position and speed of other vehicles and the like, based on external data such as image data and point cloud data input from the external sensor 21.

Moreover, the environment state acquiring part 31 acquires a vehicle state that includes a driving state of the vehicle 1 based on internal data input from the internal sensor 22. Note that the environment state acquiring part 31 can be configured so as to obtain a relative position of the vehicle 1 with respect to the lane marking with an adjacent traffic lane based on external data input from the external sensor 21, instead of estimating an absolute position of the vehicle 1 by matching position information of the vehicle 1 and map information. Moreover, information related to obstacles and information related to a steep inclined section of the road surroundings may be acquired by the environment state acquiring part 31 based on external data input from the external sensor 21, instead of, or in addition to, storing it in the map information database 24.

The path generating part 32 is configured so as to generate a driving path for automated driving, based on information acquired by the environment state acquiring part 31. Specifically, the path generating part 32 generates a driving path for the vehicle 1 to travel from the ego vehicle position of the vehicle 1 estimated by the environment state acquiring part 31 to an arrival target of automated driving.

The curve detecting part 33 detects a curved section present on the driving path generated by the path generating part 32. For example, the curve detecting part 33 detects whether or not a curved section is present on the driving path, based on information related to the road shape input from the map information database 24. The curved section will be described later.

The steep inclined section detecting part 36 detects a steep inclined section present on the outside of a curved section of a road on the driving path. The steep inclined section represents a section including a cliff or the like at which an altitude drops steeply with respect to a road surface. For example, the steep inclined section detecting part 36 detects whether or not a steep inclined section is present on the outside of a curved section of a road on the driving path, based on road information input from the map information database 24. The steep inclined section will be described later.

The target speed calculating part 34 is configured so as to calculate a target speed when the vehicle 1 performs automated driving in accordance with the driving path generated by the path generating part 32. For example, the target speed calculating part 34 calculates a target speed so as to achieve a vehicle speed which is based on a set speed selected by a user to be a limit speed of the road or lower for automated driving. Specifically, the target speed calculating part 34 calculates a target speed, which is equal to the limit speed of the road or lower and is equal to the set speed selected by the user or lower, such that a lateral acceleration rate of the vehicle 1 traveling in accordance with the driving path becomes a prescribed value G1 or lower. Note that a target steering angle when the vehicle 1 performs automated driving is also calculated in accordance with the driving path generated by the path generating part 32.

Here, the prescribed value G1 of a lateral acceleration rate is set, for example, to a value such that the vehicle 1 does not cause lateral skidding at a time of driving through a curved section. A lateral acceleration rate A when the vehicle 1 drives at a constant vehicle speed V and a constant steering angle without generating lateral skidding can be represented as A=V²/R, for example, based on a curvature radius R of the driving path and a vehicle speed V. The target speed calculating part 34 calculates the vehicle speed V at which a lateral acceleration rate becomes the prescribed value G1 (for example, G1=0.3G) or lower, as a basic target speed V1 of the vehicle 1 driving in accordance with the driving path, based on the curvature radius R of the driving path acquired from road information of the map information database 24.

The vehicle control part 35 transmits a drive command to a driving module 50, and controls movement of the vehicle 1 in a longitudinal direction and a lateral direction, so that the vehicle 1 drives at the target speed and target steering angle calculated by the target speed calculating part 34 in accordance with the driving path generated by the path generating part 32. The vehicle control part 35 estimates a speed, orientation, and lateral displacement of the vehicle 1 after Δt seconds, for example, based on the ego vehicle position and movement of characteristics of the vehicle 1, that is, the relationship of a yaw rate γ and lateral acceleration rate (d²y/dt²) generated by vehicle movement with a front wheel steering angle δ which is generated by a steering torque T at a steering mechanism while driving at the vehicle speed V. The vehicle control part 35 transmits to the driving module 50 a steering angle command for bringing a lateral displacement to yt after Δt seconds, and a speed command for achieving a speed Vt after Δt seconds.

The driving module 50 includes a driving actuator, a controller for controlling the driving actuator and the like. The driving actuator includes a steering mechanism 51, a brake 52, and an engine 53. The driving module 50 controls operation of the steering mechanism 51, the brake 52, and the engine 53, so that the vehicle 1 drives in accordance with the driving path at the target speed and target steering angle, based on the drive commands from the vehicle control part 35. Note that the driving module 50 may be configured so as to include a driving motor, instead of the engine 53, or in addition to the engine 53. In this case, the vehicle 1 functions as an electric vehicle or a hybrid vehicle.

When a deceleration command is input from the vehicle control part 35, the driving module 50 controls the vehicle speed by controlling a braking force of the brake 52. When an acceleration/deceleration command is input from the vehicle control part 35, the driving module 50 controls the vehicle speed by controlling a driving force of the engine 53. Moreover, when a steering command is input from the vehicle control part 35, the driving module 50 performs steering control by controlling the steering mechanism 51.

In a case in which there is no preceding vehicle, the automated driving controller 30 controls the vehicle 1 so as to perform constant speed driving at the target speed described above. In a case in which a speed of a preceding vehicle is at the target speed or lower and the vehicle 1 is approaching the preceding vehicle, the automated driving controller 30 controls the vehicle 1 so as to follow the preceding vehicle while maintaining an inter-vehicle distance corresponding to a set time gap (inter-vehicle time = inter-vehicle distance/ego vehicle speed), in accordance with the leading vehicle speed. In a case in which the preceding vehicle speed is faster than the speed of the vehicle 1, or the preceding vehicle has disappeared from in front of the vehicle 1, it is configured such that the vehicle accelerates to the target speed at a set acceleration rate.

Moreover, the automated driving controller 30 detects traffic lane markings and the ego vehicle position by the environment state acquiring part 31, based on the image data acquired by the external sensor 21, and performs a steering control so as to enable the vehicle 1 to travel at a center in the traffic lane. Note that the automated driving controller 30 can estimate the ego vehicle position of the vehicle 1 (the position of the vehicle itself) by various techniques, and can perform steering control so as to follow the driving path. As a technique of a position estimation for path following, a position estimation by matching the point cloud data input from the external sensor 21 with a high precision map of point groups or a high precision map of a vector map obtained from the map information database 24, or a position estimation using a GNSS, can be performed, in addition to the position estimation on the basis of a white line based on traffic lane markings (white lines) detected from the image data.

In this way, the automated driving controller 30 executes automated driving of the vehicle 1, by combining longitudinal control (speed control, inter-vehicle distance control) and lateral control (steering control, lane keeping control).

In a vehicle in which automated driving equivalent to SAE levels 3-5 is performed, since vehicle control is performed with an automatic operation apparatus for vehicle, that is, the automated driving controller 30 is the primary actor, it is basically not necessary for a driver to perform a driving operation during automated driving. Therefore, the driver rides as a passenger, even if sitting in the driver's seat. A passenger in the vehicle during automated driving tends to feel uncomfortable or uneasy in a case in which the behavior of the vehicle during automated driving is different to the behavior of the vehicle in which a passenger performs a driving operation. In particular, when the vehicle travels through a curved section, it is likely for a passenger to feel uneasy as to whether vehicle control is appropriately performed by the automated operating apparatus, and this feeling of uneasiness may increase in accordance with the topography or landform in the surroundings of the curved section.

For example, a steep inclined section, in which an altitude drops steeply with respect to a road surface, may be considered as the landform in the surroundings of a curved section which has an influence on a feeling of uneasiness of a passenger. Here, a steep inclined section is a section or a region in which the ground surface drops on the outside of a road so that an altitude drops steeply from a road surface of a traffic lane in which the vehicle travels, and it includes, for example, a cliff (such as a cliff shaped slope or a steep cliff terrain), an embankment, a pier and the like. It can be said that a steep inclined section is an area in which a passenger may feel as if there is nothing on the outside of the road.

As an example, the curved section in traffic sectioning of left side traffic will be examined. Figures 2(a) and 2(b) schematically show a right curved section and a left curved section, respectively, in which a steep inclined section is present on the outside of a road. A right curved section CA shown in Figure 2(a) can be defined as a section from a point C1 to a point C2 in which a road is curved in the right direction with a curvature of the road being a prescribed value or higher. A left curved section CB shown in Figure 2(b) can be defined as a section from a point C1 to a point C2 in which a road is curved in the left direction with a curvature of the road being a prescribed value or higher. The point C1 is a start position of the curved section, and the point C2 is an end position of the curved section.

Note that, alternatively, a curved section may be defined based on a lateral acceleration rate acting on the vehicle 1. In this case, for example, when the vehicle 1 travels at a speed set by a user which is equal to the limit speed of the road or lower, a section in which the lateral acceleration rate exceeding a preset value is generated can be defined as a curved section. Here, the value of the preset lateral acceleration rate for defining the curved section may be, for example, the same as the prescribed value G1 of the lateral acceleration rate as described above, or may be a different value.

In the explanation hereafter, the right curved section CA in traffic sectioning of left side traffic shown in Figure 2(a) may be called an outer curved section in which the left side traffic lane for the vehicle 1 to travel is positioned at the outer side in the curve, and the left curved section CB in traffic sectioning of left side traffic shown in Figure 2(b) may be called an inner curved section in which the left side traffic lane for the vehicle 1 to travel is positioned at the inner side in the curve. Note that, in a case of traffic sectioning of right side traffic, the right curved section corresponds to an inner curved section in which a traffic lane of the vehicle 1 is positioned at the inner side in the curve, and the left curved section corresponds to an outer curved section in which a traffic lane of the vehicle 1 is positioned at the outer side in the curve.

The steep inclined region D is present along the outside of a curve in the right curved section CA shown in Figure 2(a), and is present along the inside of a curve in the left curved section CB shown in Figure 2(b). In other words, the steep inclined section D is present along the outside of the curve in the outer curved section CA, and is present along the inside of the curve in the inner curved section CB. That is, the steep inclined section D is present at the side of a traffic lane in which the vehicle 1 travels, both in the right curved section (outer curved section) CA and in the left curved section (inner curved section) CB.

Information such as positions (locations), curvatures, curve start positions C1, and curve end positions C2 of curved sections are stored in the map information database 24 as road information. Moreover, information related to the steep inclined section D present adjacent to a road is stored, in association with position information of the road, in the map information database 24. In particular, a section in which an altitude drops steeply, such as a cliff (a cliff shaped slope, a steep cliff terrain), an embankment, or a pier present at the side of a traffic lane side and on the outside of a curved section of a road, is stored as the steep inclined section D.

At a time of driving through a curved section, a centrifugal force in a direction to the outside of a road, that is, a lateral acceleration, acts on the vehicle. Therefore, during traveling through a curved section, a passenger is more likely to feel uneasy compared to during traveling through a straight path. In addition, in a case in which a steep inclined section, for example, a cliff D, is present along the outside of a curve, such as in the right curved section CA shown in Figure 2(a), it has been discovered that a passenger feels a sensation that the cliff D on the outside of the road is approaching so that a feeling of uneasiness increases more than a case in which the cliff D is not present. It can be considered that this is because a passenger has a sensation that the cliff D on the outside of a road is approaching the vehicle 1 due to a lateral acceleration when the vehicle 1 travels in a traffic lane (left side traffic lane) on the outer side in the curve.

Moreover, in a case in which a steep inclined section, for example, the cliff D, is present along the inside of a curve, such as in the left curved section CB shown in Figure 2(b), it has been discovered that a passenger feels a sensation as if falling into or being sucked into the cliff D on the inside of the road so that a feeling of uneasiness increases more than a case in which the cliff D is not present. It can be considered that this is because, since the cliff D is present in a steering direction of the vehicle 1, that is, a direction that the vehicle 1 is facing, a passenger has a sensation that the vehicle 1 is approaching the cliff D on the inside of the road when the vehicle 1 travels in a traffic lane (left side traffic lane) on the inner side in the curve.

Accordingly, in the present embodiment, speed control of the vehicle 1 is adjusted so as to reduce a feeling of uneasiness of a passenger when traveling through a curved section by automated driving. Specifically, a target speed for the vehicle 1 traveling through a curved section by automated driving is set to be less than the basic target speed V1 described above. In addition, in a curved section, a target speed for traveling through the curved section is set differently for a case in which the steep inclined section D is present on the side of a traffic lane in which the vehicle 1 travels, and for a case in which the steep inclined section D is not present. Specifically, a target speed when the steep inclined section D is present on the side of a traffic lane in a curved section is set to be less than a target speed when the steep inclined section D is not present.

The basic target speed V1 is a vehicle speed calculated so that a lateral acceleration rate becomes the prescribed value G1 or lower, based on the curvature radius R of the driving path as described above. Even for a curved section on the driving path, the target speed V1 at which a lateral acceleration rate is kept at the prescribed value G1 or lower is set in accordance with the curvature radius R. The target speed calculating part 34 calculates a target speed V2 for a curved section, for example, by multiplying the basic target speed V1 by a preset first speed adjustment gain K1. In addition, in a case in which the steep inclined section D is present on the side of a traffic lane of a curved section, a target speed V3 for a curved section in which the steep inclined section D is present is calculated, by multiplying the basic target speed V1 by a preset second speed adjustment gain K2.

That is, a target speed of a curved section with no steep inclined section D can be represented as V2=K1xV1, and a target speed of a curved section with the steep inclined section D can be represented as V3=K2xV1. Here, the first speed adjustment gain K1 and the second speed adjustment gain K2 are set with an appropriate value in advance, so as to satisfy the relationship 1>K1>K2. Note that it may be configured so as to calculate the target speed V3 of a curved section with the steep inclined section D, by multiplying the target speed V2 of a curved section with no steep inclined section D by a preset speed adjustment gain. The target speeds V1, V2, and V3 of curved sections in which the curvatures are the same as one another satisfy the relationship V1>V2>V3.

Alternatively, the target speed calculating part 34 may calculate a target speed of a curved section, so that a lateral acceleration rate of the vehicle 1 driving through a curved section by automated driving becomes less than the prescribed value G1 of a lateral acceleration rate which is used when calculating the basic target speed V1 as describe above. For example, the target speed calculating part 34 sets limit values G2 and G3 of the lateral acceleration rate less than the prescribed value G1 of the lateral acceleration rate for calculating the basic target speed V1. The target speed calculating part 34 calculates the target speed V2 so as to keep a lateral acceleration rate of the vehicle 1 up to a first limit value G2 which is less than the prescribed value G1 when the vehicle 1 is driving through a curved section with no steep inclined section D, and calculates the target speed V3 so as to keep a lateral acceleration rate of the vehicle 1 up to a second limit value G3 which is less than the first limit value G2 when the vehicle 1 is driving through a curved section with the steep inclined section D. Here, the first limit value G2 and the second limit value G3 are set with an appropriate value in advance so as to satisfy G1>G2>G3. As a result, the target speeds V1, V2, and V3 of curved sections with the same curvature satisfy the relationship V1>V2>V3.

Moreover, in the present embodiment, the position of a deceleration start for entering into a curved section with the steep inclined section D is different from the position of a deceleration start for entering into a curved section with no steep inclined section D. A basic deceleration start position for decelerating to a target speed of a curved section is set to a point C3 in front by a prescribed distance L1 from the curve start position C1 of a curved section, such as shown in Figures 2(a) and 2(b), for example. In a case of curves with the same curvature, the target speed V3 for a curved section with the steep inclined section D is less than the target speed V2 for a curved section without the steep inclined section D. Therefore, when deceleration starts from the deceleration start position C3, a deceleration until reaching the curve start position C1 of a curved section with the steep inclined section D is greater than a deceleration until reaching the curve start position C1 of a curved section without steep inclined section D, which may cause sudden heavy braking.

Accordingly, in the present embodiment, a deceleration start position for entering into a curved section with the steep inclined section D on the side of a traffic lane changes to a point C4 in front of the point C3. A distance L2 from the curve start position C1 of the curved section with the steep inclined section D to the deceleration start position C4 is greater than the distance L1 from the curve start position C1 of the curved section without steep inclined section D to the deceleration start position C3. In this way, a deceleration for entering into the curved section with the steep inclined section D, and a deceleration for entering into the curved section with the same curvature without steep inclined section D, can be set to almost the same level. In other words, the distance L2 from the curve start position C1 of the curved section with the steep inclined section D to the deceleration start position C4 is set to a distance allowing the vehicle to decelerate to the target speed V3 at a deceleration which is almost at the same level as the deceleration for decelerating to the target speed V2 from the deceleration start position C3 of the curved section without steep inclined section D to the curve start position C1.

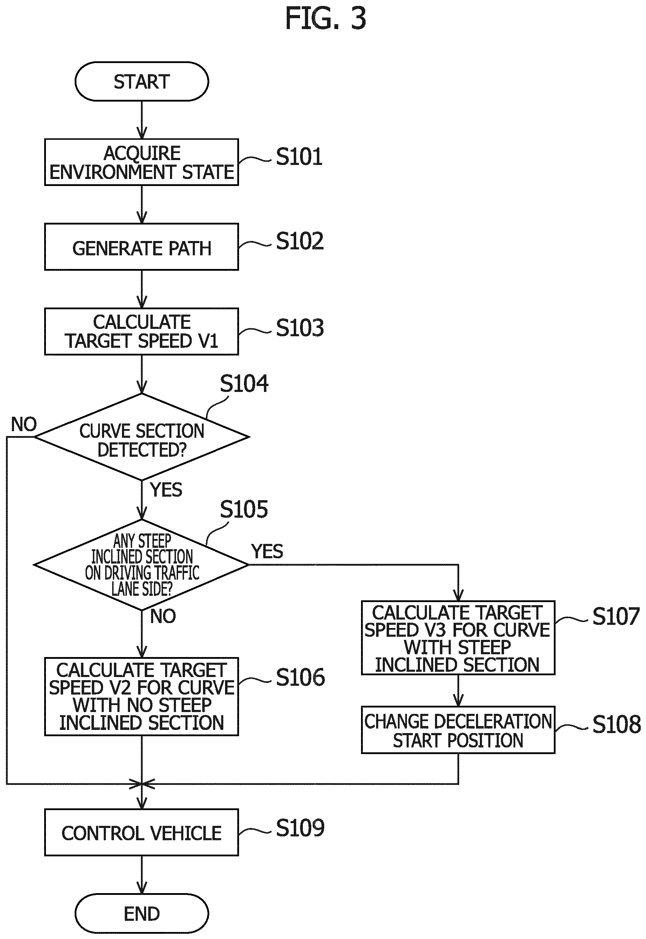

Hereinafter, a flow of speed control by the driving control apparatus 10 of the vehicle 1 in the present embodiment will be described in detail by using the flowchart of Figure 3. When a start of automated driving of the vehicle 1 is instructed by an operation of a switch or the like, which is not illustrated, the automated driving controller 30 starts a speed control process shown in Figure 3.

First, in step S101, the environment state acquiring part 31 acquires information related to a surrounding environment and information related to a vehicle state of the vehicle 1, from the external sensor 21 and the internal sensor 22. Moreover, the environment state acquiring part 31 acquires position information of the vehicle 1 from the positioning device 23, and acquires map information from the map information database 24.

In step S102, the path generating part 32 generates a driving path for the vehicle 1 to perform automated driving from an ego vehicle position of the vehicle 1 to an arrival target, based on the information acquired in step S101.

In step S103, the target speed calculating part 34 calculates the target speed V1 for the vehicle 1 to perform automated driving in accordance with the driving path generated in step S102. The target speed V1 is a vehicle speed calculated so as to keep a lateral acceleration rate to the prescribed value G1 or lower, based on the curvature radius R of the driving path acquired from road information of the map information database 24, and is a basic target speed that becomes a reference in automated driving.

In step S104, the curve detecting part 33 detects whether a curved section is present on the driving path generated in step S102, for example, based on the road information acquired from the map information database 24. Moreover, the curve detecting part 33 acquires information related to a location, a curvature, the start position C1, and the end position C2 of a curved section. If a curved section present on the driving path is detected by the curve detecting part 33, the process proceeds to step S105, and if a curved section is not detected, the process proceeds to step S109.

In step S105, the steep inclined section detecting part 36 detects whether the steep inclined section D is present on the side of a traffic lane on the outside of the road of the curved section, for example, based on the road information acquired from the map information database 24. Specifically, the steep inclined section detecting part 36 detects whether the steep inclined section D is present along the outside of the curve of the right curved section CA, such as shown in Figure 2(a), or detects whether the steep inclined section D is present along the inside of the curve of the left curved section CB, such as shown in Figure 2(b). If no steep inclined section D is present on the side of a traffic lane of the curved section, the process proceeds to step S106, and if the steep inclined section D is present on the side of a traffic lane of the curved section such as shown in Figure 2(a) or Figure 2(b), the process proceeds to step S107.

In step S106, the target speed calculating part 34 calculates the target speed V2 for a curved section with no steep inclined section D. On the other hand, in step S107, the target speed calculating part 34 calculates the target speed V3 for a curved section with the steep inclined section D. The target speed V2 for a curved section with no steep inclined section D and the target speed V3 for a curved section with the steep inclined section D are less than the basic target speed V1, and the target speed V3 for a curved section with the steep inclined section D is less than the target speed V2 for a curved section with no steep inclined section D. Therefore, the basic target speed V1, the target speed V2 for a curved section with no steep inclined section D, and the target speed V3 for a curved section with the steep inclined section D satisfy the relationship V1>V2>V3, in a case in which the curvatures of curved sections are the same.

In step S108, the vehicle control part 35 changes the deceleration start position for entering into the curved section with the steep inclined section D to the point C4 in front of the point C3. In this way, the distance L2 from the curve start position C1 of the curved section with the steep inclined section D to the deceleration start position C4 becomes longer than the distance L1 from the curve start position C1 of the curved section with no steep inclined section D to the deceleration start position C3.

In step S109, the vehicle control part 35 executes drive control of the vehicle 1 by transmitting drive commands to the driving module 50 so as to start deceleration from the deceleration start position C3 or C4 and to drive in accordance with the driving path at the calculated target speed V1, V2, or V3.

In the driving control apparatus 10 for the vehicle 1 according to the first embodiment described above, the following operational effects can be accomplished.

(1) A driving control apparatus 10 for a vehicle 1 capable of executing automated driving includes an environment state acquiring part 31 for acquiring information related to a vehicle state and a surrounding environment of the vehicle 1, a path generating part 32 for generating a driving path for automated driving based on information acquired by the environment state acquiring part 31, a curve detecting part 33 for detecting a curved section present on the driving path based on information acquired by the environment state acquiring part 31, a steep inclined section detecting part 36 for detecting a steep inclined section D, in which an altitude drops steeply with respect to a road surface of the curved section, present on an outside of a road of the curved section based on information acquired by the environment state acquiring part 31, a target speed calculating part 34 for calculating a target speed for the vehicle 1 to perform automated driving in accordance with the driving path generated by the path generating part 32, and a vehicle control part 35 for performing speed control of the vehicle 1 so as to drive along the driving path at the target speed. The target speed calculating part 34 calculates a first vehicle speed V1 as the target speed so that a lateral acceleration rate of the vehicle 1 is made to be a prescribed value G1 or lower when the vehicle 1 performs automated driving in accordance with the driving path. In a case in which a curved section is present in the driving path, the target speed calculating part 34 sets the target speed for the curved section to a second vehicle speed V2 less than the first vehicle speed V1, and in a case in which the steep inclined section D is present on the side of a driving traffic lane of the vehicle 1 in the curved section, the target speed calculating part 34 sets the target speed for the curved section in which the steep inclined section D is present to a third vehicle speed V3 less than the second vehicle speed V2.

When the vehicle 1 drives through a curved section, a passenger may feel a sensation of the vehicle 1 being pushed to the outside of a road by a centrifugal force, or may feel a sensation of the outside of a road approaching the vehicle 1, and thus, may feel uneasy. The feeling of uneasiness increases if the steep inclined section D, such as a cliff, is present at the curved section. Accordingly, by setting the target speeds V2 and V3 for the vehicle 1 to drive through the curved section by automated driving to be less than the basic target speed V1, a feeling of uneasiness by a passenger can be reduced during automated driving. In addition, by setting the target speed V3 for the curved section with the steep inclined section D present on the side of a driving traffic lane the vehicle 1 to be less than the target speed V2 for the curved section without steep inclined section D, it is possible to reliable reduce a feeling of uneasiness of the passenger in the curved section in which the steep inclined section D is present. Since the target speed V2 of the curved section without steep inclined section D is set to be less than the basic target speed V1, and to be greater than the target speed V3 of the curved section with the steep inclined section D, it is possible to reduce a feeling of discomfort of the passenger caused by the vehicle speed being too slow in the curved section in which there is no feeling of uneasiness as if falling into the steep inclined section D.

(2) The vehicle control part 35 is configured so as to start deceleration control for decelerating to the target speed for the curved section from a deceleration start position C3 set in front of a curve start position C1 of the curved section. The vehicle control part 35 sets a deceleration start position C4 for entering into an outer curved section CA, such that a distance L2 from the curve start position C1 of the curved section in which the steep inclined section D is present to the deceleration start position C4 becomes longer than a distance L1 from the curve start position C1 of the curved section in which the steep inclined section D is not present to the deceleration start position C3.

In a case in which curvature of curved sections are the same, since a target speed V3 of the curved section in which the steep inclined section D is present is less than a target speed V2 of a curved section in which the steep inclined section D is not present, when deceleration starts from the same deceleration start positions C3, sudden heavy braking is generated at the curved section in which the steep inclined section D is present, and there is a possibility of providing a feeling of uneasiness to a passenger. By changing the deceleration start position C3 in the curved section in which the steep inclined section D is present to the point C4, the deceleration for entering into the curved section in which the steep inclined section D is present can be set to almost the same level as the deceleration for entering into the curved section in which no steep inclined section D is present.

(3) The curve detecting part 33 detects a curved section present on the driving path, before a start of automated driving, based on high precision three-dimensional map information acquired from the map information database 24, and the steep inclined section detecting part 36 detects the steep inclined section D before a start of automated driving, based on high precision three-dimensional map information acquired from the map information database 24. In this way, a load by a control process during automated driving can be reduced.

(4) The target speed calculating part 34 calculates the target speed V2, by multiplying the target speed V1 by a first speed adjustment gain (first coefficient) K1, and calculates the target speed V3 by multiplying the target speed V1 by a second speed adjustment gain (second coefficient) K2 which is less than the first speed adjustment gain K1. By appropriately adjusting the coefficients K1 and K2, the target speed V2 of the curved section without steep inclined section D and the target speed V3 of the curved section with the steep inclined section D can be appropriately calculated, with the basic target speed V1 as a reference.

(5) Alternatively, the target speed calculating part 34 may calculate the target speed V2 in accordance with a curvature of the curved section, so as to maintain a lateral acceleration rate of the vehicle 1 up to a first limit value G2 less than the prescribed value G1, when the vehicle 1 drives through the curved section without steep inclined section D, or may calculate the target speed V3 in accordance with a curvature of the curved section, so as to maintain a lateral acceleration rate of the vehicle 1 up to a second limit value G3 less than the first limit value G2, when the vehicle 1 drives through the curved section with the steep inclined section D. In this way, the target speed V2 of the curved section without steep inclined section D and the target speed V3 of the curved section with the steep inclined section D can be appropriately calculated, from the viewpoint of a lateral acceleration rate acting on the vehicle 1 when driving through a curved section.

### Second Embodiment

Hereinafter, a driving control apparatus for vehicle according to a second embodiment of the present invention will be described. The basic configuration of the driving control apparatus for vehicle according to the second embodiment is the same as that of the first embodiment. Hereinafter, the differences with the first embodiment will be mainly described.

As described in the first embodiment, at a time of driving through a curved section, a centrifugal force in a direction to the outside of a road, that is, a lateral acceleration rate, acts on the vehicle. Therefore, when driving through the right curved section CA during automated driving, a passenger may have a feeling of the vehicle 1 being pushed to the outside of a road by a centrifugal force, or the outside of the road approaching the vehicle 1, which causes uneasiness to the passenger. In addition, in a case in which there is a steep inclined section D, such as a cliff, adjacent to the outside of a curve of the right curved section CA, the passenger feels uneasiness by even more. It can be considered that this is because a sensation of the steep inclined section D, such as a cliff, adjacent to the outside of a curve approaching due to a lateral acceleration rate acting on the vehicle 1. In a case in which there is the steep inclined section D adjacent to the outside of a curve of the right curved section CA, it can be considered that a feeling of uneasiness increases more than a case in which there is the steep inclined section D adjacent to the inside of a curve of the left curved section CB.

Accordingly, in the present embodiment, a target speed for driving through a curved section with the steep inclined section D is set differently for a case in which the steep inclined section D is present adjacent to the outside of a curve of the right curved section CA, and for a case in which the steep inclined section D is present adjacent to the inside of a curve of the left curved section CB. Specifically, a target speed of the case in which the steep inclined section D is present adjacent to the outside of a curve of the right curved section CA is set to be less than a target speed of the case in which the steep inclined section D is present on the inside of a curve of the left curved section CB.

The steep inclined section detecting part 36 detects whether the steep inclined section D on the outside of a road is present adjacent to the outside of a curve of the right curved section CA, or is present adjacent to the inside of a curve of the left curved section CB, based on road information input from the map information database 24.

When the steep inclined section D present adjacent to the outside of a curve of the right curved section CA on the driving path is detected by the steep inclined section detecting part 36, the target speed calculating part 34 sets a target speed for the right curved section CA with the steep inclined section D to a target speed V4 less than the target speed V3. The target speed calculating part 34 calculates the target speed V4 of the right curved section CA with the steep inclined section D, for example, by multiplying the target speed V3 of a curved section with the steep inclined section D by a preset third speed adjustment gain K3. That is, a target speed of the right curved section CA with the steep inclined section D can be represented as V4=K3xV3. Here, the third speed adjustment gain K3 is set with an appropriate value in advance, so as to satisfy the relationship 1>K3. The target speeds V3 and V4 of curved sections in which the curvatures are the same as one another satisfy the relationship V3>V4. The target speed V3 of the curved section with the steep inclined section D is utilized for the left curved section CB with the steep inclined section D.

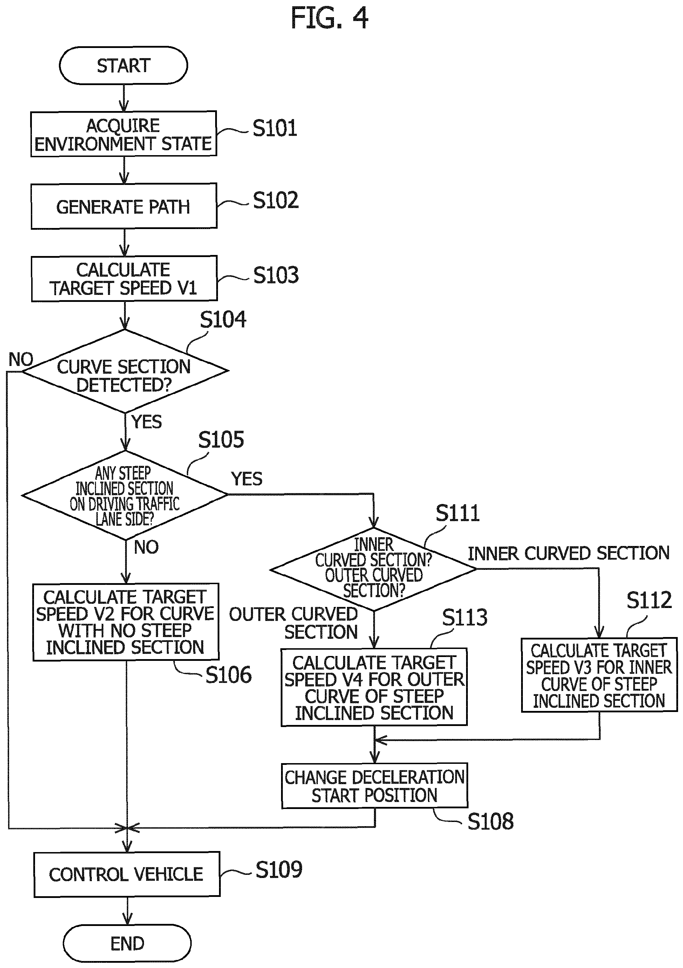

Hereinafter, a flow of speed control by the driving control apparatus 10 of the vehicle 1 in the present embodiment will be described in detail by using the flowchart of Figure 4. When a start of automated driving of the vehicle 1 is instructed by an operation of a switch or the like, which is not illustrated, the automated driving controller 30 starts a speed control process shown in Figure 4. Since the processes in steps S101 to S106 shown in Figure 4 are the same as the processes in steps S101 to S106 of the flow chart of Figure 3, a description of these processes will be omitted.

In step S105, if it is determined that the steep inclined section D is present at the side of a driving traffic lane of the curved section, the process proceeds to step S111. In step S111, it is determined whether the detected steep inclined section D is present on the inside of a curve of the inner curved section (left curved section) CB, or is present on the outside of a curve of the outer curved section (right curved section) CA. If the steep inclined section D is adjacent to the inside of a curve of the inner curved section in which a driving traffic lane of the vehicle 1 is positioned at the inner side in the curve, that is, the left curved section CB in left side traffic, the process proceeds to step S112. On the other hand, if the steep inclined section D is adjacent to the outside of a curve of the outer curved section in which a driving traffic lane of the vehicle 1 is positioned at the outer side in the curve, that is, the right curved section CA in left side traffic, the process proceeds to step S113.

In step S112, the target speed calculating part 34 calculates the target speed V3 for the left curved section CB in which the steep inclined section D is present. This target speed V3 is the same as the stated target speed V3 for the curved section with the steep inclined section D. In step S113, the target speed V4 of the right curved section CA in which the steep inclined section D is present is calculated. The target speed V4 for the right curved section CA with the steep inclined section D is set to be less than the target speed V3 for the left curved section CB with the same curvature and with the steep inclined section D.

In step S108, the vehicle control part 35 changes a deceleration start position for entering into the curved section with the steep inclined section D to the point C4 in front of the point C3. In this way, the distance L2 from the curve start position C1 of the curved section with the steep inclined section D to the deceleration start position C4 is made longer than the first distance L1 from the curve start position C1 of the curved section without steep inclined section D to the deceleration start position C3. Note that the distance from the deceleration start position C4 for entering into the right curved section CA with the steep inclined section D to the curve start position C1 may be set to be longer than the distance from the deceleration start position C4 for entering into the left curved section CB with the steep inclined section D to the curve start position C1, so as to enable deceleration to the target speed V3 or to the target speed V4 at a deceleration rate approximately of the same extent.

In step S109, the vehicle control part 35 executes drive control of the vehicle 1 by transmitting drive commands to the driving module 50 so as to start deceleration from the deceleration start position C3 or C4 and so as to drive in accordance with the driving path at the calculated target speed V1, V2, V3, or V4.

In the driving control apparatus 10 for the vehicle 1 according to the second embodiment described above, the following operational effects can be accomplished, in addition to the effect by the first embodiment as described above.

(1) In a case in which the outer curved section CA in which a driving traffic lane of the vehicle 1 is positioned at the outer side in the curve is detected on the driving path by the curve detecting part 33, and the steep inclined section D along the outer curved section CA is detected by the steep inclined section detecting part 36, the target speed calculating part 34 sets a target speed for the outer curved section CA in which the steep inclined section D is present to a fourth vehicle speed V4 less than the third vehicle speed V3.

In the outer curved section (right curved section) CA in which the vehicle 1 travels in a traffic lane on the outer side in the curve, a passenger may feel a sensation of the vehicle 1 being pushed to the outside of a road by a centrifugal force, or may feel a sensation of the outside of a road approaching the vehicle 1, and thus, may feel uneasy. In a case in which there is the steep inclined section D on the outside of the curve of the outer curved section CA, a sensation of approaching the steep inclined section D on the outside of a road occurs due to a centrifugal force, and a passenger is likely to feel uneasy more than a case in which there is the steep inclined section D on the inside of a curve of the inner curved section CB. Accordingly, a target speed of the left curved section (inner curved section) CB in which there is the steep inclined section D on the inside of the curve is set to V3, and a target speed of the right curved section (outer curved section) CA in which there is the steep inclined section D on the outside of the curve is set to V4, which is less than V3. In this way, it is possible to reduce a feeling of uneasiness caused to a passenger in the outer curved section CA in which the steep inclined section D is present on the outside of the curve.

### Third Embodiment

Hereinafter, a driving control apparatus for vehicle according to a third embodiment of the present invention will be described. The basic configuration of the driving control apparatus for vehicle according to the third embodiment is the same as that of the first and second embodiments. Hereinafter, the differences with the second embodiment will be mainly described.

In the second embodiment described above, a target speed for driving through a curved section by automated driving was adjusted, by taking into consideration a feeling of uneasiness caused to a passenger in a case in which the steep inclined section D is adjacent to the outside of the curve of the outer curved section (right curved section) CA. It can be considered that such feeling of uneasiness is alleviated in a case in which a guard rail is installed in the steep inclined section D. In other words, in a case in which a guard rail is not installed in the steep inclined section D of the right curved section CA, a feeling of uneasiness of a passenger can be considered to increase, compared to a case in which a guard rail is installed.

Accordingly, in the present embodiment, a target speed for driving through the right curved section CA is set differently for a case in which a guard rail is present adjacent to the outside of the curve of the right curved section CA in which the steep inclined section D is present, and for a case in which a guard rail is not present. Specifically, a target speed in a case in which a guard rail is not present adjacent to the outside of the curve of the right curved section CA with the steep inclined section D is set to be less than a target speed in a case in which a guard rail is present.

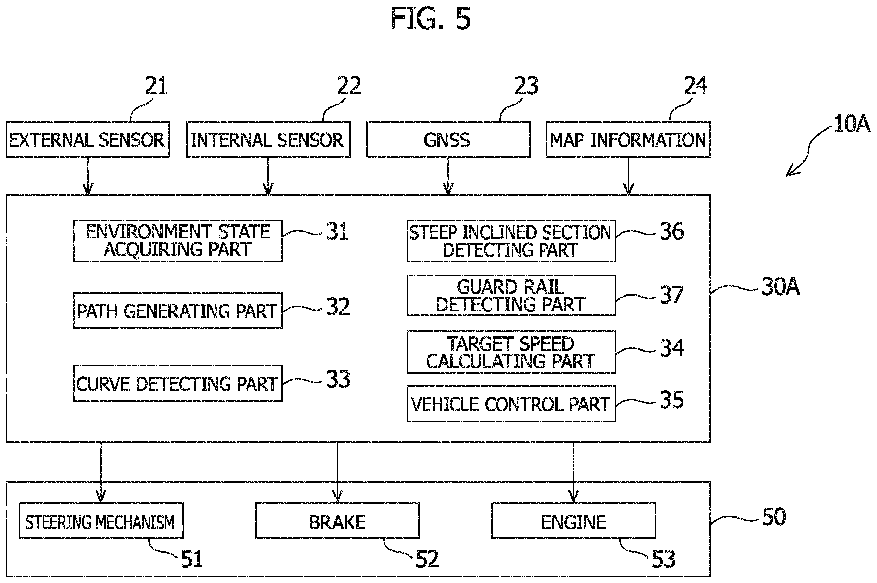

Figure 5 shows a schematic configuration of a driving control apparatus 10A in the third embodiment. The driving control apparatus 10A for the vehicle 1 additionally has a guard rail detecting part 37. An automated driving controller 30A is configured so as to functionally execute the guard rail detecting part 37, in addition to the functions described above.

Information of a guard rail present on a road is stored, in association with position information of the road, in the map information database 24. The guard rail detecting part 37 detects whether or not a guard rail is present adjacent to the outside of the curve of the right curved section CA in which the steep inclined section D is present, based on road information input from the map information database 24.

In a case in which a guard rail is not detected adjacent to the outside of the curve of the right curved section CA in which the steep inclined section D is present by the guard rail detecting part 37, the target speed calculating part 34 sets a target speed for the right curved section CA with the steep inclined section D and with no guard rail to a target speed V5 less than the target speed V4. The target speed calculating part 34 calculates the target speed V5 of the right curved section CA with the steep inclined section D and without guard rail, for example, by multiplying the target speed V4 of the right curved section CA with the steep inclined section D by a preset fourth speed adjustment gain K4. That is, a target speed of the right curved section CA with the steep inclined section D and with no guard rail can be represented as V5=K4xV4. Here, the fourth speed adjustment gain K4 is set with an appropriate value in advance, so as to satisfy the relationship 1>K4. The target speeds V4 and V5 of curved sections with the same curvature satisfy the relationship V4>V5. The target speed V4 of the right curved section CA with the steep inclined section D is utilized for the right curved section CA with the steep inclined section D, in which a guard rail is installed.

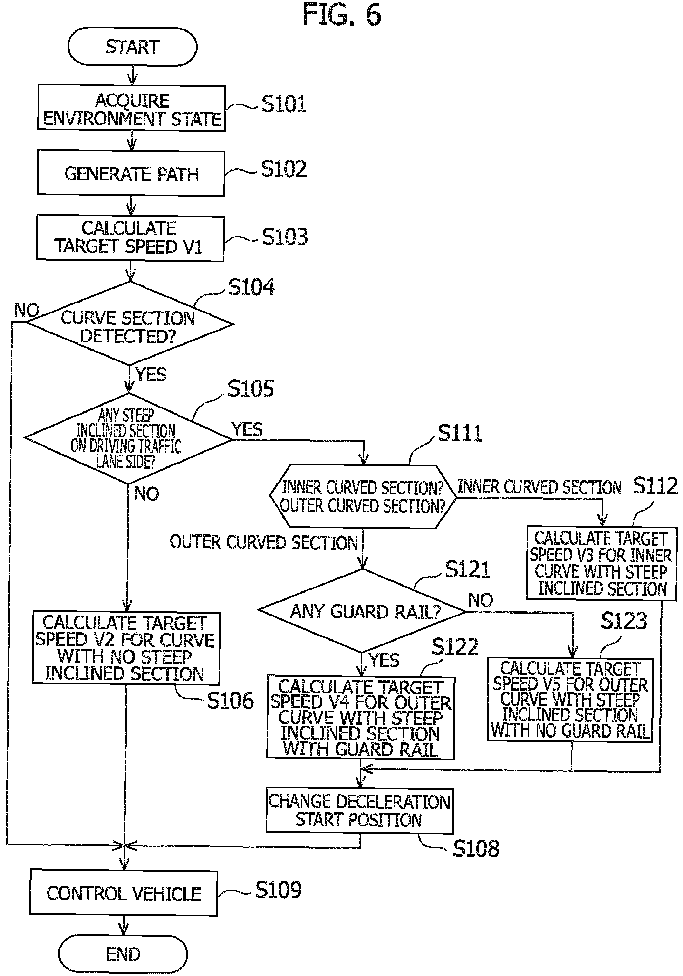

Hereinafter, a flow of speed control by the driving control apparatus 10A for the vehicle 1 in the present embodiment will be described in detail by using the flow chart of Figure 6. When a start of automated driving of the vehicle 1 is instructed by an operation of a switch or the like, which is not illustrated, the automated driving controller 30A starts a speed control process shown in Figure 6. Since the processes in steps S101 to S112 shown in Figure 6 are the same as the processes in steps S101 to S112 of the flow chart of Figure 4, a description of these processes will be omitted.

In step S111, if it is determined that the steep inclined section D is adjacent to the inside of the curve of the left curved section (inner curved section) CB, the process proceeds to step S112, and if it is determined that the steep inclined section D is adjacent to the outside of the curve of the right curved section (outer curved section) CA, the process proceeds to step S121.

In step S121, the guard rail detecting part 37 detects whether a guard rail is present along the outside of the curve of the right curved section CA, for example, based on road information acquired from the map information database 24. In a case in which a guard rail is installed in the right curved section CA with the steep inclined section D, the process proceeds to step S122. On the other hand, in a case in which a guard rail is not installed in the right curved section CA with the steep inclined section D, the process proceeds to step S123.

In step S122, the target speed calculating part 34 calculates the target speed V4 for the right curved section CA with the steep inclined section D, in which a guard rail is installed. This target speed V4 is the same as the target speed V4 for the right curved section CA with the steep inclined section D described above. In step S123, the target speed V5 for the right curved section CA in which the steep inclined section D is present with no guard rail is calculated. The target speed V5 for the right curved section CA in which the steep inclined section D is present without guard rail is set to be less than the target speed V4 for the right curved section CA with the same curvature, in which the steep inclined section D is present with a guard rail.

In step S108, the vehicle control part 35 changes a deceleration start position for entering into the curved section with the steep inclined section D to the point C4 in front of the point C3. In step S109, the vehicle control part 35 executes drive control of the vehicle 1 by transmitting drive commands to the driving module 50 so as to start deceleration from the deceleration start position C3 or C4 and so as to drive in accordance with the driving path at one of the calculated target speeds V1-V5.

In the driving control apparatus 10A for the vehicle 1 in the third embodiment described above, the following operational effects can be accomplished, in addition to the effects by the second embodiment described above.

The guard rail detecting part 37 is configured to detect a guard rail present on the outside of a road along a curved section, based on information acquired by the environment state acquiring part 31. In a case in which a guard rail is not detected along the outer curved section CA in which the steep inclined section D is present by the guard rail detecting part 37, the target speed calculating part 34 sets a target speed to a fifth vehicle speed V5 less than the fourth vehicle speed V4. In a case in which a guard rail is not present adjacent to the outside of the curve of the outer curved section CA, a feeling of uneasiness caused to a passenger increases, compared to a case in which a guard rail is present. A feeling of uneasiness caused to a passenger can be reduced, by making the target speed V5 of the outer curved section CA with no guard rail in the steep inclined section D less than the target speed V4 of the outer curved section C5 with a guard rail in the steep inclined section D.

### Fourth Embodiment

Hereinafter, a driving control apparatus for vehicle according to a fourth embodiment of the present invention will be described. The basic configuration of the driving control apparatus for vehicle according to the fourth embodiment is the same as that of the first to third embodiments described above. Hereinafter, the differences with the first embodiment will be mainly described.

In the embodiments described above, a target speed is adjusted in order to reduce a feeling of uneasiness of a passenger in a case in which the vehicle 1 drives through a curved section with the steep inclined section D by automated driving. It can be considered that this feeling of uneasiness becomes remarkable when the vehicle 1 travels in a traffic lane adjacent to the steep inclined section D. Accordingly, in the present embodiment, it is configured so as to perform the above described adjustment of the target speed and the deceleration start position, only when the vehicle 1 is traveling in a traffic lane which is at the outermost in the curve adjacent to the steep inclined section D or at the innermost in the curve adjacent to the steep inclined section D, on the road having a plurality of traffic lanes in the same traffic direction, such as a road having two or more traffic lanes in one side.

The environment state acquiring part 31 can determine whether or not the vehicle 1 is driving in the outermost traffic lane of the curve of the right curved section CA with the steep inclined section D or in the innermost traffic lane of the curve of the left curved section CB with the steep inclined section D, for example, based on external data such as image data and point cloud data input from the external sensor 21. That is, it can be determined whether or not the vehicle 1 is driving in the leftmost traffic lane in the curved section in traffic sectioning of left side traffic. Note that in a case in which a curved section with the steep inclined section D is a road with only one traffic lane, it can be determined that the vehicle 1 is driving in a traffic lane adjacent to the steep inclined section D in the curved section.

When it is determined that the vehicle 1 is driving in a traffic lane adjacent to the steep inclined section D in a curved section, the target speed calculating part 34 calculates the target speed V3 for the curved section in which the steep inclined section D is present, and the vehicle control part 35 changes a deceleration start position for entering into the curved section with the steep inclined section to the point C4 in front of point C3. When the vehicle 1 is driving in a traffic lane other than the traffic lane adjacent to the steep inclined section D in the curved section, the target speed calculating part 34 can set, for example, the target speed V2 for the curved section with no steep inclined section D as a target speed for driving in a traffic lane which is not adjacent to the steep inclined section D in the curved section. Specifically, in step S105 of the flowchart of Figure 3 described above, when it is determined to be driving in the traffic lane adjacent to the steep inclined section D in the curved section, the process proceeds to step S107. On the other hand, when it is determined to be driving in a traffic lane other than the traffic lane adjacent to the steep inclined section D in the curved section, or the steep inclined section D is not present in the curved section, the process proceeds to step S106.

In the driving control apparatus for the vehicle 1 according to the fourth embodiment described above, the following operational effects can be accomplished, in addition to the effects according to the first to third embodiments described above.

In a case in which a curved section present on a driving path has a plurality of traffic lanes, the target speed calculating part 34 sets a target speed to the third vehicle speed V3, and the vehicle control part 35 performs a change of a deceleration start position, only if the driving traffic lane of the vehicle 1 is a traffic lane, adjacent to the steep inclined section D, among the plurality of traffic lanes. In a case in which the curved section is a road having two or more traffic lanes in one side, a feeling of uneasiness, such as approaching the steep inclined section D, is strong when the vehicle 1 drives in the traffic lane adjacent to the steep inclined section D (traffic lane on a left end). Accordingly, the feeling of uneasiness can be reduced, by limiting a change of the target speed and the deceleration start position to the case in which the vehicle 1 drives in the traffic lane adjacent to the steep inclined section D in the curved section. Moreover, in a case in which the vehicle 1 drives in another traffic lane, which takes into consideration that the feeling of uneasiness is less compared to the traffic lane adjacent to the steep inclined section D, since a change of the target speed and the deceleration start position is not performed, an uncomfortable feeling provided to the passenger by the vehicle speed of the curved section being too slow can be reduced, and an influence on the total driving time of the vehicle 1 to the arrival target can be reduced to a minimum.

### Modified Embodiments

(1) In the first embodiment described above, while the vehicle 1 adjusts the target speed for driving through the curved section with the steep inclined section D by automated driving, it may further adjust the target speed of automated driving by taking into consideration a gradient of a road. For example, in a case in which the curved section is a downward slope, it can be considered that a feeling of uneasiness of a passenger increases, such as being pushed to the outside of the curve with the steep inclined section D or falling to the inside of the curve with the steep inclined section D. Accordingly, in the present embodiment, in a road with a downward gradient of a prescribed percent or higher, a target speed is set to be lower compared to on a flat road.

The curved section detecting part 33 can detect whether or not the curved section with the steep inclined section D is present in a downward gradient, for example, based on road information acquired from the map information database 24.

The target speed calculating part 34, sets, for example, the target speed V3 described above if the curved section with the steep inclined section D is a flat road, and sets a target speed to a target speed V6 less than the target speed V3 if the curved section with the steep inclined section D is a downward gradient.

The target speed calculating part 34, for example, calculates the target speed V6 of the curved section of a downward gradient with the steep inclined section D, by multiplying the target speed V3 of the curved section with the steep inclined section D by a preset fifth speed adjustment gain K5. That is, the target speed of the curved section of a downward gradient with the steep inclined section D can be represented as V6 = K5 x V3. Here, the fifth speed adjustment gain K5 is set with an appropriate value in advance so as to satisfy the relationship 1>K5. The target speeds V3 and V6 of curved sections with the same curvature satisfy the relationship V3>V6.

Note that in the second embodiment or third embodiment described above, the target speed of automated driving may be adjusted by taking into consideration a gradient of a road. For example, if the right curved section CA in which the steep inclined section D is present is a downward gradient, the target speed is set to be lower, compared to a case in which the right curved section CA with the steep inclined section D is on a flat road. Moreover, for example, in a case in which the right curved section CA with no guard rail in the steep inclined section D is a downward gradient, the target speed is set to be lower, compared to a case in which the right curved section CA with no guard rail in the steep inclined section D is on a flat road.

(2) In the embodiments described above, the deceleration start position for entering into the curved section with the steep inclined section D is changed to a point C4 in front of a point C3 at a prescribed distance L1 from a curve start point C1. However, it is not limited to this, and a deceleration start position may be fixed to the point C3 at the prescribed distance L1 from the curve start point C1, or the deceleration start position may not be changed. Moreover, it may be configured so as to decelerate at a constant deceleration for entering into a curved section regardless of whether there is a steep inclined section D or not, instead of changing the deceleration start position for entering into the curved section with the steep inclined section D.

(3) In the embodiments described above, the target speeds V2 and V3 of the curved section with no steep inclined section D and of the curved section with the steep inclined section D are each calculated, by using the first and second speed adjustment gains K1 and K2 or the first and second limit values G2 and G3 of the lateral acceleration rate, with the target speed V1, at which the lateral acceleration rate is made to be the prescribed value G1 or less, being set as a reference. However, it is not limited to this, and it may be configured so as to respectively determine the target speeds V2 and V3, from speed maps of the curved section with no steep inclined section D and the curved section with the steep inclined section D prepared in advance for each curvature.

(4) In the embodiments described above, the curve detecting part 33 and the steep inclined section detecting part 36 detect whether or not a curved section is present and whether or not the steep inclined section D is present on a driving path, respectively, based on information related to a road shape input from the map information database 24, it is not limited to this. For example, the curve detecting part 33 and the steep inclined section detecting part 36 may be configured so as to detect the curved section and the steep inclined section D present on a driving path, respectively, based on the external data such as the image data and point cloud data input from the external sensor 21. However, as described above, the load by the control process during automated driving can be reduced, by detecting the curved section and the steep inclined section D before a start of automated driving, based on the high precision three-dimensional map information acquired from the map information database 24. Moreover, the guard rail detecting part 37 may similarly detect whether or not a guard rail is present along the outside of the road of the right curved section CA with the steep inclined section D on the driving path, based on the external data such as the image data and point cloud data input from the external sensor 21, instead of the road information input from the map information database 24.

Alternatively, in a case in which the vehicle 1 drives at a speed set by a user, which is a limit speed of the road or less, for example, the curve detecting part 33 may be configured so as to determine a section in which the lateral acceleration rate exceeding a preset value is generated as a curved section. The lateral acceleration rate of the vehicle 1 when driving in the driving path can be calculated, for example. based on a curvature of a road acquired by the environment state acquiring part 31, a target steering angle for automated driving or the like. The load by the control process during automated driving can be reduced, by detecting the curved section before a start of automated driving.

(5) In the embodiments described above, the basic target speed V1, the target speed V2 for the curved section with no steep inclined section D, and the target speed V3 for the curved section with the steep inclined section D are set so as to satisfy the relationship of V1>V2>V3. However, it is not limited to this, and the basic target speed V1 may be used as it is as the target speed V2 for the curved section with no steep inclined section D.

(6) In the third embodiment described above, a target speed for driving in the right curved section CA is set differently, for a case in which a guard rail is present in the right curved section CA with the steep inclined section D, and for a case in which a guard rail is not present. Similarly for the left curved section CB with the steep inclined section D, it may be configured to adjust a target speed. Specifically, a target speed for the left curved section CB with the steep inclined section D with no guard rail adjacent to the inside of the curve may be set to be less than a target speed in a case in which a guard rail is present.

Heretofore, while several embodiments of the present invention have been stated, the present invention is not limited to these embodiments, and it is additionally stated that various types of modifications and changes are also possible within the scope of the present invention as defined in the appended claims.

### [Reference Signs List]

- 1: vehicle
- 10, 10A: driving control apparatus
- 24: map information database
- 30, 30A: automated driving controller
- 31: environment state acquiring part
- 32: path generating part
- 33: curve detecting part
- 34: target speed calculating part
- 35: vehicle control part
- 36: steep inclined section detecting part
- 37: guard rail detecting part
- C1: curve start position
- C3, C4: deceleration start position
- D: steep inclined section
- G1: prescribed value of lateral acceleration rate
- G2, G3: first and second limit value
- K1-K5: first to fifth speed adjustment gain

## Claims

1. A driving control apparatus (10, 10A) for vehicle (1) capable of executing automated driving, the driving control apparatus (10, 10A) for vehicle (1) comprising:
an environment state acquiring part (31) configured to acquire information related to a vehicle state and a surrounding environment of the vehicle (1);
a path generating part (32) configured to generate a driving path for automated driving based on information acquired by the environment state acquiring part (31);
a curve detecting part (33) configured to detect a curved section present on the driving path based on information acquired by the environment state acquiring part (31);
a target speed calculating part (34) configured to calculate a target speed for the vehicle (1) to perform automated driving in accordance with the driving path generated by the path generating part (32); and
a vehicle control part (35) configured to perform speed control of the vehicle (1) so as to drive along the driving path at the target speed, wherein:
the target speed calculating part (34) is configured to calculate a first vehicle speed (V1) as the target speed such that a lateral acceleration rate of the vehicle (1) is made to be a prescribed value (G1) or lower when the vehicle (1) performs automated driving in accordance with the driving path; and
in a case in which a curved section is present in the driving path, the target speed calculating part is configured to set the target speed for the curved section to a second vehicle speed (V2) less than the first vehicle speed (V1),
**characterized in that**:
the driving control apparatus further comprises a steep inclined section detecting part (36) configured to detect a steep inclined section (D), in which an altitude drops steeply with respect to a road surface of the curved section, present on an outside of a road of the curved section based on information acquired by the environment state acquiring part (31); and
in a case in which the steep inclined section (D) is present on a side of a driving traffic lane of the vehicle (1) in the curved section, the target speed calculating part (34) is configured to set the target speed for the curved section in which the steep inclined section (D) is present to a third vehicle speed (V3) less than the second vehicle speed (V2).

2. The driving control apparatus (10, 10A) for vehicle (1) according to claim 1, wherein
in a case in which an outer curved section, in which a driving traffic lane of the vehicle (1) is at an outermost side in a curve, is detected in the driving path by the curve detecting part (33), and the steep inclined section (D) is detected along the outer curved section by the steep inclined section detecting part (36), the target speed calculating part (34) is configured to set the target speed in the outer curved section in which the steep inclined section (D) is present to a fourth vehicle speed (V4) less than the third vehicle speed (V3).

3. The driving control apparatus (10, 10A) for vehicle (1) according to claim 2, further comprising:
a guard rail detecting part (37) configured to detect a guard rail present on an outside of a road along the curved section based on information acquired by the environment state acquiring part (31), wherein
in a case in which the guard rail is not detected along the outer curved section in which the steep inclined section (D) is present by the guard rail detecting part (37), the target speed calculating part (34) is configured to set the target speed to a fifth vehicle speed (V5) less than the fourth vehicle speed (V4).

4. The driving control apparatus (10, 10A) for vehicle (1) according to any one of claims 1 to 3, wherein:
the vehicle control part (35) is configured to start deceleration control for decelerating to the target speed for the curved section from a deceleration start position (C3) set in front of a start position (C1) of the curved section; and
the vehicle control part (35) is configured to change the deceleration start position (C3) for entering into the curved section such that a distance from a start position (C1) of the curved section, in which the steep inclined section (D) is present, to the deceleration start position becomes longer than a distance from a start position (C1) of the curved section, in which the steep inclined section (D) is not present, to the deceleration start position.

5. The driving control apparatus (10, 10A) for vehicle (1) according to claim 4, wherein
in a case in which the curved section present on the driving path has a plurality of traffic lanes, the target speed calculating part (34) is configured to set the target speed to the third vehicle speed (V3) and the vehicle control part (35) is configured to perform a change of the deceleration start position (C3) only if a driving traffic lane of the vehicle (1) is a traffic lane adjacent to the steep inclined section (D) of the plurality of vehicle lanes.

6. The driving control apparatus (10, 10A) for vehicle (1) according to any one of claims 1 to 3, wherein:
the curve detecting part (33) is configured to detect the curved section present on the driving path before a start of the automated driving based on high precision three-dimensional map information obtained from a map information database (24); and
the steep inclined section detecting part (36) is configured to detect the steep inclined section (D) before the start of the automated driving based on the high precision three-dimensional map information.

7. The driving control apparatus (10, 10A) for vehicle (1) according to claim 1, wherein
the target speed calculating part (34) is configured to
calculate the second vehicle speed (V2) by multiplying the first vehicle speed (V1) by a first coefficient (K1), and
calculate the third vehicle speed (V3) by multiplying the first vehicle speed (V1) by a second coefficient (K2) less than the first coefficient (K1).

8. The driving control apparatus (10, 10A) for vehicle (1) according to claim 1, wherein
the target speed calculating part (34) is configured to
calculate the second vehicle speed (V2) in accordance with a curvature of the curved section so as to maintain a lateral acceleration rate of the vehicle (1) up to a first limit value (G2) less than the prescribed value (G1) when the vehicle (1) drives through the curved section, and
calculate the third vehicle speed (V3) in accordance with a curvature of the curved section so to maintain a lateral acceleration rate of the vehicle (1) up to a second limit value (G3) less than the first limit value (G2) when the vehicle (1) drives through the curved section in which the steep inclined section (D) is present.

## Patentansprüche

1. Fahrsteuervorrichtung (10, 10A) für ein Fahrzeug (1), welches dazu in der Lage ist, ein automatisiertes Fahren auszuführen, wobei die Fahrsteuervorrichtung (10, 10A) für ein Fahrzeug (1) umfasst:
einen Umgebungszustandserfassungsteil (31), welcher dazu eingerichtet ist, Informationen in Bezug auf einen Fahrzeugzustand und eine Umgebung des Fahrzeugs (1) zu erfassen;
einen Wegerzeugungsteil (32), welcher dazu eingerichtet ist, auf Grundlage von durch den Umgebungszustandserfassungsteil (31) erfassten Informationen einen Fahrweg für ein automatisiertes Fahren zu erzeugen;
einen Kurvendetektionsteil (33), welcher dazu eingerichtet ist, auf Grundlage von durch den Umgebungszustandserfassungsteil (31) erfassten Informationen einen auf dem Fahrweg vorhandenen Kurvenabschnitt zu detektieren;
einen Zielgeschwindigkeitsberechnungsteil (34), welcher dazu eingerichtet ist, eine Zielgeschwindigkeit für das Fahrzeug (1) zu berechnen, um im Einklang mit dem durch den Wegerzeugungsteil (32) erzeugten Fahrweg ein automatisiertes Fahren durchzuführen; und
einen Fahrzeugsteuerteil (35), welcher dazu eingerichtet ist, eine Geschwindigkeitssteuerung des Fahrzeugs (1) durchzuführen, um mit der Zielgeschwindigkeit entlang des Fahrwegs zu fahren, wobei:
der Zielgeschwindigkeitsberechnungsteil (34) dazu eingerichtet ist, eine erste Fahrzeuggeschwindigkeit (V1) als die Zielgeschwindigkeit zu berechnen, so dass eine Querbeschleunigungsrate des Fahrzeugs (1) auf einen vorgegebenen Wert (G1) oder weniger gebracht wird, wenn dass Fahrzeug (1) im Einklang mit dem Fahrweg ein automatisiertes Fahren durchführt; und
in einem Fall, in welchem in dem Fahrweg ein Kurvenabschnitt vorhanden ist, der Zielgeschwindigkeitsberechnungsteil dazu eingerichtet ist, die Zielgeschwindigkeit für den Kurvenabschnitt auf eine zweite Fahrzeuggeschwindigkeit (V2) einzustellen, welche niedriger ist als die erste Fahrzeuggeschwindigkeit (V1),
**dadurch gekennzeichnet, dass**:
die Fahrsteuervorrichtung ferner einen Steiler-Gefälleabschnitt-Detektionsteil (36) umfasst, welcher dazu eingerichtet ist, auf Grundlage von durch den Umgebungszustandserfassungsteil (31) erfassten Informationen einen an einer Außenseite einer Straße des Kurvenabschnitts vorhandenen Abschnitt (D) mit einem steilen Gefälle zu detektieren, in welchem eine Höhe in Bezug auf eine Straßenoberfläche des Kurvenabschnitts steil abfällt; und
in einem Fall, in welchem der Abschnitt (D) mit einem steilen Gefälle auf einer Seite einer Fahrspur des Fahrzeugs (1) in dem Kurvenabschnitt vorhanden ist, der Zielgeschwindigkeitsberechnungsteil (34) dazu eingerichtet ist, die Zielgeschwindigkeit für den Kurvenabschnitt, in welchem der Abschnitt (D) mit einem steilen Gefälle vorhanden ist, auf eine dritte Fahrzeuggeschwindigkeit (V3) einzustellen, welche niedriger ist als die zweite Fahrzeuggeschwindigkeit (V2).

2. Fahrsteuervorrichtung (10, 10A) für ein Fahrzeug (1) nach Anspruch 1, wobei
in einem Fall, in welchem ein äußerer Kurvenabschnitt, in welchem sich eine Fahrspur des Fahrzeugs (1) in einer Kurve an einer äußersten Seite befindet, durch den Kurvendetektionsteil (33) in dem Fahrweg detektiert wird und der Abschnitt (D) mit einem steilen Gefälle durch den Steiler-Gefälleabschnitt-Detektionsteil (36) entlang des äußeren Kurvenabschnitts detektiert wird, der Zielgeschwindigkeitsberechnungsteil (34) dazu eingerichtet ist, die Zielgeschwindigkeit in dem äußeren Kurvenabschnitt, in welchem der Abschnitt (D) mit einem steilen Gefälle vorhanden ist, auf eine vierte Fahrzeuggeschwindigkeit (V4) einzustellen, welche niedriger ist als die dritte Fahrzeuggeschwindigkeit (V3).

3. Fahrsteuervorrichtung (10, 10A) für ein Fahrzeug (1) nach Anspruch 2, ferner umfassend:
einen Leitplankendetektionsteil (37), welcher dazu eingerichtet ist, auf Grundlage von durch den Umgebungszustandserfassungsteil (31) erfassten Informationen eine an einer Außenseite einer Straße entlang des Kurvenabschnitts vorhandene Leitplanke zu detektieren, wobei
in einem Fall, in welchem die Leitplanke entlang des äußeren Kurvenabschnitts, in welchem der Abschnitt (D) mit einem steilen Gefälle vorhanden ist, durch den Leitplankendetektionsteil (37) nicht detektiert wird, der Zielgeschwindigkeitsberechnungsteil (34) dazu eingerichtet ist, die Zielgeschwindigkeit auf eine fünfte Fahrzeuggeschwindigkeit (V5) einzustellen, welche niedriger ist als die vierte Fahrzeuggeschwindigkeit (V4).

4. Fahrsteuervorrichtung (10, 10A) für ein Fahrzeug (1) nach einem der Ansprüche 1 bis 3, wobei:
der Fahrzeugsteuerteil (35) dazu eingerichtet ist, eine Verzögerungssteuerung für den Kurvenabschnitt zum Verzögern auf die Zielgeschwindigkeit von einer vor einer Startposition (C1) des Kurvenabschnitts eingestellten Verzögerungsstartposition (C3) aus zu starten; und
der Fahrzeugsteuerteil (35) dazu eingerichtet ist, die Verzögerungsstartposition (C3) zum Einfahren in den Kurvenabschnitt derart zu ändern, dass eine Entfernung von einer Startposition (C1) des Kurvenabschnitts, in welchem der Abschnitt (D) mit einem steilen Gefälle vorhanden ist, zu der Verzögerungsstartposition länger wird als eine Entfernung von einer Startposition (C1) des Kurvenabschnitts, in welchem der Abschnitt (D) mit einem steilen Gefälle nicht vorhanden ist, zu der Verzögerungsstartposition.

5. Fahrsteuervorrichtung (10, 10A) für ein Fahrzeug (1) nach Anspruch 4, wobei
in einem Fall, in welchem der Kurvenabschnitt, welcher auf dem Fahrweg vorhanden ist, eine Mehrzahl von Fahrspuren aufweist, der Zielgeschwindigkeitsberechnungsteil (34) dazu eingerichtet ist, die Zielgeschwindigkeit auf die dritte Fahrzeuggeschwindigkeit (V3) einzustellen, und der Fahrzeugsteuerteil (35) dazu eingerichtet ist, eine Änderung der Verzögerungsstartposition (C3) nur dann durchzuführen, wenn eine Fahrspur des Fahrzeugs (1) eine zu dem Abschnitt (D) mit einem steilen Gefälle der Mehrzahl von Fahrzeugspuren benachbarte Fahrspur ist.

6. Fahrsteuervorrichtung (10, 10A) für ein Fahrzeug (1) nach einem der Ansprüche 1 bis 3, wobei:
der Kurvendetektionsteil (33) dazu eingerichtet ist, auf Grundlage von aus einer Karteninformationsdatenbank (24) erhaltenen hochpräzisen dreidimensionalen Karteninformationen vor einem Start des automatisierten Fahrens den auf dem Fahrweg vorhandenen Kurvenabschnitt zu detektieren; und
der Steiler-Gefälleabschnitt-Detektionsteil (36) dazu eingerichtet ist, auf Grundlage der hochpräzisen dreidimensionalen Karteninformationen vor dem Start des automatisierten Fahrens den Abschnitt (D) mit einem steilen Gefälle zu detektieren.

7. Fahrsteuervorrichtung (10, 10A) für ein Fahrzeug (1) nach Anspruch 1, wobei
der Zielgeschwindigkeitsberechnungsteil (34) eingerichtet ist zum
Berechnen der zweiten Fahrzeuggeschwindigkeit (V2) durch ein Multiplizieren der ersten Fahrzeuggeschwindigkeit (V1) mit einem ersten Koeffizienten (K1) und
Berechnen der dritten Fahrzeuggeschwindigkeit (V3) durch ein Multiplizieren der ersten Fahrzeuggeschwindigkeit (V1) mit einem zweiten Koeffizienten (K2), welcher kleiner ist als der erste Koeffizient (K1).

8. Fahrsteuervorrichtung (10, 10A) für ein Fahrzeug (1) nach Anspruch 1, wobei
der Zielgeschwindigkeitsberechnungsteil (34) eingerichtet ist zum
Berechnen der zweiten Fahrzeuggeschwindigkeit (V2) im Einklang mit einer Krümmung des Kurvenabschnitts, um eine laterale Beschleunigungsrate des Fahrzeugs (1) bis zu einem ersten Grenzwert (G2) beizubehalten, welcher kleiner ist als der vorgegebene Wert (G1), wenn das Fahrzeug (1) durch den Kurvenabschnitt fährt, und
Berechnen der dritten Fahrzeuggeschwindigkeit (V3) im Einklang mit einer Krümmung des Kurvenabschnitts, um eine laterale Beschleunigungsrate des Fahrzeugs (1) bis zu einem zweiten Grenzwert (G3) beizubehalten, welcher kleiner ist als der erste Grenzwert (G2), wenn das Fahrzeug (1) durch den Kurvenabschnitt fährt, in welchem der Abschnitt (D) mit einem steilen Gefälle vorhanden ist.

## Revendications

1. Appareil de contrôle de conduite (10, 10A) pour véhicule (1) capable d'exécuter une conduite automatisée, l'appareil de contrôle de conduite (10, 10A) pour véhicule (1) comprenant :
une partie d'acquisition d'état d'environnement (31) configurée pour acquérir des informations relatives à un état de véhicule et à un environnement ambiant du véhicule (1) ;
une partie de génération de parcours (32) configurée pour générer un parcours de conduite pour une conduite automatisée sur la base d'informations acquises par la partie d'acquisition d'état d'environnement (31) ;
une partie de détection de virage (33) configurée pour détecter une section en virage présente sur le parcours de conduite sur la base d'informations acquises par la partie d'acquisition d'état d'environnement (31) ;
une partie de calcul de vitesse cible (34) configurée pour calculer une vitesse cible pour que le véhicule (1) réalise une conduite automatisée conformément au parcours de conduite généré par la partie de génération de parcours (32) ; et
une partie de contrôle de véhicule (35) configurée pour réaliser un contrôle de vitesse du véhicule (1) de façon à conduire le long du parcours de conduite à la vitesse cible, dans lequel :
la partie de calcul de vitesse cible (34) est configurée pour calculer une première vitesse de véhicule (V1) comme étant la vitesse cible de sorte qu'un taux d'accélération latérale du véhicule (1) soit amené à valoir une valeur prescrite (G1) ou inférieure lorsque le véhicule (1) réalise une conduite automatisée conformément au parcours de conduite ; et
dans un cas dans lequel une section en virage est présente dans le parcours de conduite, la partie de calcul de vitesse cible est configurée pour régler la vitesse cible pour la section en virage sur une deuxième vitesse de véhicule (V2) inférieure à la première vitesse de véhicule (V1),
**caractérisé en ce que** :
l'appareil de contrôle de conduite comprend en outre une partie de détection de section inclinée abrupte (36) configurée pour détecter une section inclinée abrupte (D), dans laquelle une altitude chute de façon abrupte par rapport à une surface routière de la section en virage, présente sur un extérieur d'une route de la section en virage sur la base d'informations acquises par la partie d'acquisition d'état d'environnement (31) ; et
dans un cas dans lequel la section inclinée abrupte (D) est présente sur un côté d'une voie de circulation de conduite du véhicule (1) dans la section en virage, la partie de calcul de vitesse cible (34) est configurée pour régler la vitesse cible pour la section en virage dans laquelle la section inclinée abrupte (D) est présente sur une troisième vitesse de véhicule (V3) inférieure à la deuxième vitesse de véhicule (V2).

2. Appareil de contrôle de conduite (10, 10A) pour véhicule (1) selon la revendication 1, dans lequel
dans un cas dans lequel une section en virage externe, dans laquelle une voie de circulation de conduite du véhicule (1) est sur un côté le plus externe dans un virage, est détectée dans le parcours de conduite par la partie de détection de virage (33), et la section inclinée abrupte (D) est détectée le long de la section en virage externe par la partie de détection de section inclinée abrupte (36), la partie de calcul de vitesse cible (34) est configurée pour régler la vitesse cible dans la section en virage externe dans laquelle la section inclinée abrupte (D) est présente sur une quatrième vitesse de véhicule (V4) inférieure à la troisième vitesse de véhicule (V3).

3. Appareil de contrôle de conduite (10, 10A) pour véhicule (1) selon la revendication 2, comprenant en outre :
une partie de détection de glissière de sécurité (37) configurée pour détecter une glissière de sécurité présente sur un extérieur d'une route le long de la section en virage sur la base d'informations acquises par la partie d'acquisition d'état d'environnement (31), dans lequel
dans un cas dans lequel la glissière de sécurité n'est pas détectée le long de la section en virage externe dans laquelle la section inclinée abrupte (D) est présente par la partie de détection de glissière de sécurité (37), la partie de calcul de vitesse cible (34) est configurée pour régler la vitesse cible sur une cinquième vitesse de véhicule (V5) inférieure à la quatrième vitesse de véhicule (V4).

4. Appareil de contrôle de conduite (10, 10A) pour véhicule (1) selon l'une quelconque des revendications 1 à 3, dans lequel :
la partie de contrôle de véhicule (35) est configurée pour débuter un contrôle de décélération pour une décélération jusqu'à la vitesse cible pour la section en virage à partir d'une position de début de décélération (C3) placée à l'avant d'une position de début (C1) de la section en virage ; et
la partie de contrôle de véhicule (35) est configurée pour modifier la position de début de décélération (C3) pour l'entrée dans la section en virage de sorte qu'une distance d'une position de début (C1) de la section en virage, dans laquelle la section inclinée abrupte (D) est présente, à la position de début de décélération devienne plus longue qu'une distance d'une position de début (C1) de la section en virage, dans laquelle la section inclinée abrupte (D) n'est pas présente, à la position de début de décélération.

5. Appareil de contrôle de conduite (10, 10A) pour véhicule (1) selon la revendication 4, dans lequel
dans un cas dans lequel la section en virage présente sur le parcours de conduite possède une pluralité de voies de circulation, la partie de calcul de vitesse cible (34) est configurée pour régler la vitesse cible sur la troisième vitesse de véhicule (V3) et la partie de contrôle de véhicule (35) est configurée pour réaliser un changement de la position de début de décélération (C3) uniquement si une voie de circulation de conduite du véhicule (1) est une voie de circulation adjacente à la section inclinée abrupte (D) de la pluralité de voies de véhicule.

6. Appareil de contrôle de conduite (10, 10A) pour véhicule (1) selon l'une quelconque des revendications 1 à 3, dans lequel :
la partie (33) de détection de virage est configurée pour détecter la section en virage présente sur le parcours de conduite avant un début de la conduite automatisée sur la base d'informations cartographiques tridimensionnelles de haute précision obtenues auprès d'une base de données d'informations cartographiques (24) ; et
la partie de détection de section inclinée abrupte (36) est configurée pour détecter la section inclinée abrupte (D) avant le début de la conduite automatisée sur la base des informations cartographiques tridimensionnelles de haute précision.

7. Appareil de contrôle de conduite (10, 10A) pour véhicule (1) selon la revendication 1, dans lequel
la partie de calcul de vitesse cible (34) est configurée pour calculer la deuxième vitesse de véhicule (V2) par la multiplication de la première vitesse de véhicule (V1) par un premier coefficient (K1), et
calculer la troisième vitesse de véhicule (V3) par la multiplication de la première vitesse de véhicule (V1) par un deuxième coefficient (K2) inférieur au premier coefficient (K1).

8. Appareil de contrôle de conduite (10, 10A) pour véhicule (1) selon la revendication 1, dans lequel
la partie de calcul de vitesse cible (34) est configurée pour calculer la deuxième vitesse de véhicule (V2) conformément à une courbure de la section en virage de façon à conserver un taux d'accélération latérale du véhicule (1) jusqu'à une première valeur limite (G2) inférieure à la valeur prescrite (G1) lorsque le véhicule (1) circule sur la section en virage, et
calculer la troisième vitesse de véhicule (V3) conformément à une courbure de la section en virage de façon à conserver un taux d'accélération latérale du véhicule (1) jusqu'à une deuxième valeur limite (G3) inférieure à la première valeur limite (G2) lorsque le véhicule (1) circule sur la section en virage dans laquelle la section inclinée abrupte (D) est présente.
